# FASCICULE DE BREVET EUROPEEN

(11) **EP 1 342 644 B1**
(45) Date de publication et mention de la délivrance du brevet: **29.12.2004**
(21) Numéro de dépôt: 03290432.8
(22) Date de dépôt: 24.02.2003
(51) Int. Cl.: B62D 5/30, B64C 25/50

(54) **Architecture de système hydraulique de commande d'orientation**
Hydraulische Lenkvorrichtung
Hydraulic steering system

(30) Priorité: 04.03.2002 FR 0202692
(43) Date de publication de la demande: 10.09.2003
(73) Titulaire: Messier-Bugatti, 78140 Velizy Villacoublay (FR)
(72) Inventeur: Collet, Olivier, 91120 Palaiseau (FR); Dorget, Emmanuel, 92800 Puteaux (FR); Patrigeon, Claire, 91570 Bievres (FR); Bucheton, Daniel, 78150 Le Chesnay (FR)
(74) Mandataire: Jaunez, Xavier

(56) Documents cités:
- US-A- 4 190 130
- US-A- 4 422 290
- US-A- 4 574 904
- PATENT ABSTRACTS OF JAPAN vol. 008, no. 227 (M-332), 18 octobre 1984 (1984-10-18) & JP 59 109495 A (MITSUBISHI JUKOGYO KK), 25 juin 1984 (1984-06-25)

## Description

### DOMAINE DE L'INVENTION

L'invention concerne une architecture de système hydraulique d'orientation, notamment destiné à équiper un aéronef.

### ARRIERE-PLAN DE L'INVENTION

Les aéronefs comprennent en général un atterrisseur auxiliaire dont la ou les roues sont orientables afin de permettre la manoeuvre de l'aéronef au sol. Pour les aéronefs de grande taille, il est parfois prévu un ou plusieurs bogies orientables sur les atterrisseurs principaux, en complément du dispositif d'orientation de l'atterrisseur auxiliaire.

Les parties orientables des atterrisseurs sont en général actionnées par un ou plusieurs vérins qui sont alimentés par le dispositif de génération de pression de l' aéronef via un bloc hydraulique d'orientation situé à proximité des vérins, le plus souvent directement sur l'atterrisseur. De façon connue en soi, le bloc hydraulique d'orientation comprend un distributeur, en général de type proportionnel, permettant de contrôler l'apport de fluide vers le ou les vérins de façon à commander l'orientation de la partie orientable de l'atterrisseur en fonction des ordres du pilote.

La fonction d'orientation n'est en général pas considérée comme critique du point de vue de la sécurité de l'aéronef. En effet, sa perte n'entraîne pas de conséquences catastrophiques, et la fonction d'orientation peut être compensée par un freinage différentiel associé ou non à une poussée différentielle des moteurs. Si besoin, l'aéronef peut être remorqué.

Il est donc courant que le bloc hydraulique d'orientation ne soit connecté qu'à une seule source d'alimentation, le bloc hydraulique étant agencé pour permettre la libre rotation de la partie orientable de l'atterrisseur lorsque l'aéronef est à l'arrêt, ou encore en cas de panne du dispositif de génération de pression.

Cependant, la perte de la fonction d'orientation peut gêner de façon importante l'exploitation de l'aéronef. En effet, les manoeuvres de l'aéronef par freinage différentiel ne permettent pas d'effectuer des virages à faible rayon de courbure, ce qui peut se révéler incompatible avec la largeur de piste disponible pour les aéronefs de grande taille. Par ailleurs, les virages serrés effectués par blocage des roues d'un atterrisseur principal sollicitent fortement ledit atterrisseur en torsion, ce qui nuit à sa durée de vie. En outre, la mobilisation d'un tracteur et le remorquage de l' aéronef est une source de perte de temps importante, ce qui peut perturber de façon inacceptable l'exploitation de l'aéroport.

Selon une technique classique, l'augmentation de la fiabilité de la fonction d'orientation peut être obtenue au moyen du doublement du circuit d'alimentation principal par un circuit d'alimentation secours.

Mais cette solution appliquée au cas d'espèce présente de nombreux inconvénients. Sur les aéronefs gros porteurs, le bloc hydraulique d'orientation de l'atterrisseur auxiliaire est éloigné du dispositif de génération de pression de l'aéronef (qui se trouve au niveau des moteurs de l'aéronef) d'une distance de plusieurs dizaines de mètres, et le doublement de la tuyauterie induirait un surpoids préjudiciable. Par ailleurs, des impératifs de ségrégation obligent à un cheminement différent des circuits principal et secours dans la structure de l'aéronef, ce qui complique la conception de l'aéronef.

L'état de la technique est également illustré par les documents US-A-4 422 290, US-A-4 574 904, US-A-4 190 130 et JP-A-59 109 495 dont l'enseignement est commenté ci-après.

Le document US-A-4 422 290 décrit une architecture de système d'orientation comprenant un vérin de commande d'orientation connecté à un distributeur proportionnel. En mode normal, un sélecteur général connecte le port d'alimentation du distributeur à un dispositif de génération de pression, et le port de retour à une réserve (dont le remplissage n'est d'ailleurs pas assuré en mode normal), tandis qu'en mode de panne, ledit port d'alimentation du distributeur est mis en communication à la fois avec le dispositif de génération de pression et avec un accumulateur. On ne dispose en fait pas d'un véritable mode alterné de fonctionnement.

Le document US-A-4 574 904 décrit une autre architecture dans laquelle un accumulateur est maintenu sous pression en mode normal par une pompe auxiliaire. En mode de panne, une vanne met en communication l'accumulateur avec le distributeur central, ledit accumulateur n'étant alors plus relié à la pompe auxiliaire.

Le document US-A-4 190 130 décrit encore une autre architecture à pompe auxiliaire et accumulateur, dans laquelle la pompe auxiliaire tire le fluide nécessaire dans la réserve principale.

Le document JP-A-59 109 495 décrit enfin une architecture de système d'orientation dans laquelle le système de secours possède son propre distributeur proportionnel, celui du circuit principal étant shunté en mode de panne.

### OBJET DE L'INVENTION

L'invention vise à permettre une fiabilité optimale de la fonction d'orientation de l'aéronef sans toutefois encourir les inconvénients ou limitations des solutions précitées.

### BREVE DESCRIPTION DE L'INVENTION

L'architecture de système hydraulique d'orientation selon l'invention comprend au moins un vérin de commande d'orientation ayant des chambres connectées aux sorties d'un distributeur qui présente un port d'alimentation et un port de retour, et l'architecture également comprend un accumulateur ainsi qu'une électropompe associée à une réserve de secours qui est agencée pour maintenir un niveau de pression prédéterminé dans l'accumulateur, l'architecture comprenant en outre un sélecteur général agencé pour, dans un mode normal de fonctionnement, connecter le port d'alimentation du distributeur à un dispositif de génération de pression et le port de retour du distributeur à une réserve principale associée au dispositif de génération de pression tout en assurant le remplissage de la réserve de secours, et, dans un mode alterné de fonctionnement, connecter le port d'alimentation du distributeur à l'accumulateur.

Ainsi, lorsque le dispositif de génération de pression de l'aéronef fonctionne normalement, le bloc hydraulique d'orientation est alimenté comme dans l'art antérieur par le dispositif de génération de pression de l'aéronef.

En cas de panne du dispositif de génération de pression, ce qui correspond à un mode alterné de fonctionnement, le sélecteur général commute l'alimentation du distributeur de telle sorte que celle-ci soit assurée par l'accumulateur, l'électropompe étant alors chargée de regonfler l'accumulateur au fur et à mesure des consommations de fluide par le bloc hydraulique d'orientation.

Ainsi, la fonction d'orientation continue à être assurée en cas de panne du dispositif de génération de pression, le recours à un circuit d'alimentation secours lourd et complexe n'étant dès lors pas nécessaire.

Selon un mode de réalisation particulier, le sélecteur général comprend une vanne de mode normal et une vanne de mode alterné connectées aux deux entrées d'un clapet navette qui possède une sortie connectée au port d'alimentation du distributeur, de sorte que, dans le mode normal de fonctionnement, la vanne de mode normal connecte l'entrée correspondante du clapet navette au dispositif de génération de pression tandis que la vanne de mode alterné connecte l'autre entrée du clapet navette à la réserve principale, et dans le mode alterné de fonctionnement, la vanne de mode normal connecte l'entrée correspondante du clapet navette à la réserve principale tandis que la vanne de mode alterné connecte l'autre entrée du clapet navette à l'accumulateur.

Avantageusement, le sélecteur général est agencé pour, dans le mode normal de fonctionnement, connecter le port de retour du distributeur à la réserve principale ou à la réserve de secours en fonction des indications de capteurs associés, et dans le mode alterné de fonctionnement, connecter le port de retour du distributeur à la réserve de secours.

De préférence alors, le port de retour du distributeur est connecté aussi bien à la réserve principale qu'à la réserve de secours, le sélecteur général comprenant une vanne de retour qui, dans le mode normal de fonctionnement, laisse ouvert la connexion à la réserve principale ou à la réserve de secours, et, dans le mode alterné de fonctionnement, ferme la connexion à la réserve principale.

Selon un aspect de l'invention, l'accumulateur est équipé d'un capteur de pression pour délivrer une information de gonflage dudit accumulateur, cette information étant utilisée en mode alterné de fonctionnement pour commander l'électropompe pour regonfler l'accumulateur.

Avantageusement encore, l'accumulateur est connecté via un clapet anti-retour au dispositif de génération de pression afin de pouvoir le remplir et le précharger. L'accumulateur est en outre protégé des surpressions par un clapet de surpression qui est connecté à la réserve principale, le clapet de surpression étant manoeuvrable manuellement pour provoquer la vidange de l'accumulateur afin de permettre la maintenance du système.

D'autres caractéristiques et avantages de l'invention apparaîtront plus clairement à la lumière de la description qui suit d'un mode de réalisation particulier non limitatif de l'invention.

### BREVE DESCRIPTION DES DESSINS

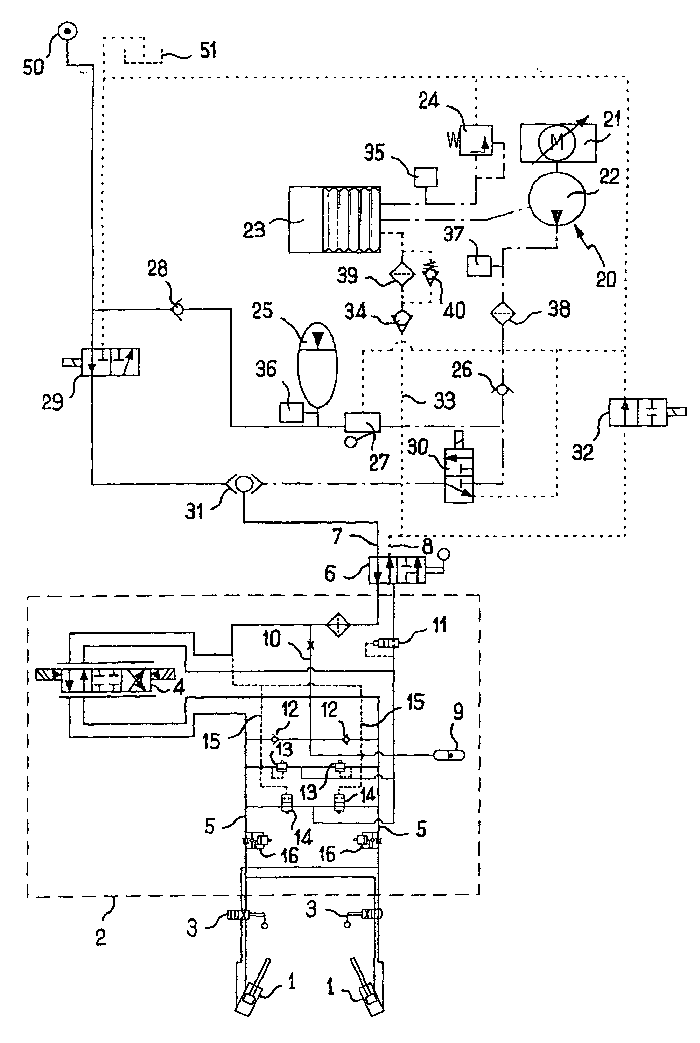

Il sera fait référence à la figure unique du dessin annexé qui représente schématiquement une architecture de système hydraulique d'orientation selon l'invention associée à un atterrisseur d'aéronef, dans une position correspondant au mode normal de fonctionnement.

### DESCRIPTION DETAILLEE DE L'INVENTION

En référence à la figure, et de façon connue en soi, la partie orientable de l'atterrisseur (non représentée) est actionnée à l'aide de deux vérins 1 disposés en « push-pull ». Dans cette disposition, l'une des parties des vérins (ici le cylindre) est montée rotative sur l'atterrisseur par rapport à un axe parallèle à l'axe de rotation de la partie orientable de l'atterrisseur, l'autre partie des vérins (la tige) étant montée rotative sur la partie orientable de l'atterrisseur selon un axe parallèle aux deux axes précités.

Les deux vérins 1 sont alimentés par un bloc hydraulique d'orientation 2 symbolisé par un rectangle en pointillés, via des distributeurs rotatifs 3 qui permettent la commutation adéquate de l'alimentation et du retour hydraulique aux chambres du vérin 1 associé lorsque celui-ci passe par une position où les trois axes sont contenus dans un même plan.

Selon la position angulaire de la partie orientable de l'atterrisseur, les deux vérins 1 peuvent pousser ensemble, tirer ensemble, ou encore travailler de façon différentielle en « push-pull ». Mais quelle que soit la position angulaire, chacune des chambres d'un vérin est reliée à l'une des chambres de l'autre vérin, de sorte que l'on peut considérer que les vérins 1 se comportent du point de vue hydraulique comme un seul vérin double effet.

Le bloc hydraulique d'orientation 2 comprend, toujours de façon connue en soi, un distributeur proportionnel 4 (ou servovalve) chargé de distribuer le fluide hydraulique, via deux lignes de distribution 5, dans les chambres adéquates des vérins 1 en vue de provoquer la rotation de la partie orientable de l'atterrisseur dans le sens désiré par le pilote. De façon connue en soi, un ou plusieurs capteurs (non représentés ici) délivrent un signal de position angulaire de la partie orientable de l'atterrisseur qui est intégré dans une boucle de rétroaction qui commande la position du distributeur proportionnel 4.

Le bloc hydraulique d'orientation 2 est branché à un circuit hydraulique extérieur (décrit plus loin) via une vanne d'isolation 6 à commande mécanique qui est située en général près de l'articulation de l'atterrisseur sur l'aéronef, et qui isole le bloc hydraulique d'orientation 2 lorsque l'atterrisseur est relevé, afin d'éviter toute manoeuvre intempestive de la partie orientable de l'atterrisseur lorsque l'atterrisseur est rentré dans la soute de l'aéronef. La vanne d'isolation 6 connecte le port d'alimentation du distributeur proportionnel 4 à une ligne d'alimentation 7, et le port de retour du distributeur proportionnel 4 à une ligne de retour 8.

Le bloc hydraulique 2 comporte en l'espèce un accumulateur 9 qui est gonflé par une dérivation 10 de la ligne d'alimentation 7, et qui est maintenu à une pression de tarage par un clapet de tarage 11 sur la ligne de retour 8. A titre d'information, cette pression de tarage est en général relativement basse, de l'ordre par exemple d'une quinzaine de bars.

L'accumulateur 9 est en outre relié à chacune des lignes de distribution 5 par des clapets anti-retour 12 qui permettent le transvasement d'une certaine quantité de fluide de l'accumulateur 9 vers les chambres des vérins 1 concernés, pour le cas où la pression dans lesdites chambres viendrait à tomber en dessous de la pression de tarage de l'accumulateur 9. Cette disposition évite la cavitation dans les chambres des vérins 1.

Par ailleurs, l'accumulateur 9 est relié à chacune des lignes de distribution 5 par des clapets de surpression 13 qui permettent la décharge dans l'accumulateur d'une certaine quantité de fluide en cas de dépassement, dans les chambres concernées des vérins 1, de la pression de réglage des clapets de surpression 13. Cette disposition permet donc de protéger les vérins contre les surpressions.

Enfin, l'accumulateur 9 est relié aux lignes de distribution 5 par des clapets 14 qui sont commandés par une dérivation 15 de la ligne d'alimentation 7 de sorte que, quand le bloc hydraulique d'orientation 2 est alimenté, les clapets 14 sont fermés et les lignes de distribution 5 sont isolées l'une de l'autre, et lorsque le bloc hydraulique d'orientation 2 n'est pas alimenté, les clapets 14 sont ouverts pour permettre la mise en communication des chambres des vérins entre elles et avec l'accumulateur 9.

De la sorte, lors d'un remorquage de l'aéronef, la partie orientable de l'atterrisseur peut tourner librement, le fluide contenu dans chacune des chambres des vérins 1 étant transvasé dans les autres chambres ou dans l'accumulateur 9 en tant que de besoin, sans qu'aucune résistance ne soit opposée à la rotation de la partie orientable de l'atterrisseur.

Enfin, le bloc hydraulique d'orientation 2 comporte sur chacune des lignes d'alimentation 5 des clapets d'amortissement 16 (ou anti-shimmy) destinés à amortir les éventuelles oscillations angulaires qui pourraient affecter la partie orientable de l'atterrisseur, en vue d'éviter tout couplage desdites oscillations avec des vibrations de l'atterrisseur selon l'un de ses modes propres.

Selon un aspect essentiel de l'invention, il est prévu des moyens de secours permettant d'assurer l'alimentation du bloc hydraulique d'orientation 2 en cas de défaillance du dispositif de génération de pression 50 de l'aéronef.

Ces moyens comportent une électropompe 20, comprenant ici un moteur électrique 21 à régime variable entraînant une pompe 22 à cylindrée fixe. L'électropompe 20 est associée par son port d'aspiration à une réserve de secours 23 qui est maintenue pressurisée par un clapet de tarage 24. Il est à noter que les fuites de la pompe 22 sont dirigées vers la réserve de secours 23.

Le port de sortie de l'électropompe 20 est relié à un accumulateur 25 via un clapet anti-retour 26. L'accumulateur 25 est préchargé à la pression du circuit normal par un clapet anti-retour 28, et protégé des surpressions par un clapet de surpression 27. On notera que l'accumulateur 25 est également relié au dispositif de génération de l'aéronef, noté 50, via le clapet anti-retour 28, ce qui permet d'assurer son gonflage par le dispositif de génération de pression 50 de l'aéronef lorsque celui-ci fonctionne.

Avantageusement, le clapet de tarage 27 est manoeuvrable manuellement pour permettre la vidange de l'accumulateur 25 lors d'une opération de maintenance.

Par ailleurs, les moyens de secours comprennent également un sélecteur général composé ici d'une vanne de mode normal 29 et d'une vanne de mode alterné 30, dont les sorties sont connectées aux entrées d'un clapet navette 31, la sortie du clapet navette 31 formant la ligne d'alimentation 7 du bloc hydraulique d'orientation 2. Par ailleurs, le sélecteur général comprend en outre une vanne de retour 32 disposée sur la ligne de retour 8 du bloc hydraulique d'orientation 2. Cette vanne 32 permet de diriger le débit retour de la ligne 8 soit directement vers la réserve 51 en mode normal, soit vers le réservoir de secours 23 en mode normal pour le remplir ou en mode secours pour fermer le circuit.

Le fonctionnement des moyens de secours est le suivant.

En mode de fonctionnement normal, la vanne de mode normal 29 met en communication le dispositif de génération de pression 50 de l'aéronef avec l'entrée correspondante du clapet navette 31, tandis que la vanne de mode alterné 30 met l'autre entrée du clapet navette 31 en communication avec la réserve principale 51 de l'aéronef, comme cela est illustré sur la figure.

La ligne d'alimentation 7 du bloc hydraulique d'orientation 2 est ainsi reliée au dispositif de génération de pression 50 de l'aéronef.

Quant à la ligne retour 8 du bloc hydraulique d'orientation 2, elle est alors mise en communication avec la réserve principale 51 de l'aéronef par la vanne de retour 32, comme illustré ici.

On notera qu'il existe une ligne 33 qui met également la ligne retour 8 en communication avec la réserve de secours 23 via un clapet anti-retour 34, qui permet de remplir la réserve de secours 23 à chaque fois que sa pression est inférieure à la pression régnant dans le circuit de retour vers la réserve principale 51 de l'aéronef. Un capteur de pression 35 permet de vérifier le bon remplissage de la réserve de secours 23.

Par ailleurs, l'accumulateur 25 est maintenu gonflé par le dispositif de génération de pression 50 de l'aéronef.

La ligne 33 permet en mode normal d'assurer le remplissage de la réserve de secours 23 par fermeture de la vanne 22, le fluide s'écoulant alors à travers ladite réserve de secours 23, le clapet de surpression 24 assurant la pressurisation du réservoir et son remplissage.

Quand le niveau requis est atteint, la vanne 32 s'ouvre, autorisant le passage du débit retour directement vers la réserve principale 51, ceci afin d'éviter la pollution du filtre 39 par un débit continu. Le volume d'huile de réserve reste emprisonné dans la réserve de secours 23 par le clapet anti-retour 34 et le clapet de surpression 24.

Un capteur de niveau (non visible sur la figure) intégré à la réserve de secours 23 et le capteur de pression 35 permettent de gérer ces cycles de remplissage.

De plus, le capteur de pression 35 permet d'ouvrir la vanne 32 en cas de surpression dans la réserve de secours 23.

En mode alterné, les vannes 29, 30, 32 sont manoeuvrées (position non illustrée), de sorte que l'entrée du clapet navette 31 associée à la vanne de mode normal 29 est mise au retour vers la réserve principale 51 de l'aéronef, tandis que l'entrée du clapet navette 31 associée à la vanne de mode alterné 30 est mise en communication avec l'accumulateur 25.

La ligne d'alimentation 7 est donc en communication avec l'accumulateur 25, et le bloc hydraulique d'orientation 2 est alimenté par l'accumulateur.

Par ailleurs, la vanne de retour 32 est fermée, de sorte que la ligne de retour 8 du bloc hydraulique d'orientation 2 est connectée uniquement à la réserve de secours 23.

On a donc ainsi formé un circuit fermé dans lequel le fluide transite successivement par la réserve de secours 23 puis par l'électropompe 20 pour gonfler l'accumulateur 25.

Puis l'accumulateur 25 se décharge dans le bloc hydraulique d'orientation 2 via la vanne de mode alterné 30 par le clapet navette 31, en tant que de besoin. Enfin le fluide revient du bloc hydraulique d'orientation 2 vers la réserve de secours 23, bouclant ainsi le circuit fermé.

Le clapet de surpression 24 protège la réserve de secours 23 des surpressions engendrées par une élévation de température ou par les différences de volumes déplacés par les vérins.

Les moyens de secours fonctionnent donc de manière autonome, sans faire appel à une alimentation hydraulique auxiliaire. Les moyens de secours pourront être installés aussi près que possible de l'atterrisseur concerné, par exemple dans la soute de celui-ci ou directement sur l'atterrisseur.

On notera qu'un capteur de pression 36 permet de connaître à tout moment la pression régnant dans l'accumulateur 25 et ainsi de commander l'électropompe 20 en tant que de besoin pour regonfler l'accumulateur 25.

Pour surveiller le fonctionnement de l'électropompe 20, un capteur de pression 37 est avantageusement disposé sur la sortie de l'électropompe 20.

Par ailleurs, afin de protéger les organes hydrauliques et nettoyer le fluide hydraulique, un filtre 38 est disposé sur la sortie de l'électropompe 20, et un filtre 39 avec by-pass 40 est disposé sur la ligne 33 de remplissage de la réserve de secours 23.

L'invention n'est pas limitée au mode particulier de réalisation qui vient d'être décrit, mais bien au contraire entend couvrir toute variante qui entre dans le cadre de l'invention tel que défini par les revendications.

En particulier, bien que l'on ait décrit les moyens de secours comme étant séparés du bloc hydraulique d'orientation, ces moyens de secours pourront être intégrés dans le bloc hydraulique d'orientation.

Bien que l'on ait illustré le sélecteur général comme comprenant la vanne de mode normal, la vanne de mode alterné, le clapet anti-retour et la vanne de retour, tout autre composant hydraulique ou groupe de composants hydrauliques permettant de faire commuter l'alimentation du bloc hydraulique d'orientation du dispositif de génération de pression 50 de l'aéronef vers l'accumulateur 25 est englobé dans le cadre de l'invention.

Bien que l'on ait indiqué que le distributeur utilisé était du type proportionnel, on pourra envisager également tout type de distributeur permettant de contrôler le débit de fluide dans les chambres des vérins d'orientation, et notamment des dispositifs de distribution dits « bang-bang » ou équivalent.

Enfin, bien que l'on ait illustré l'architecture de système hydraulique d'orientation selon l'invention comme étant appliquée à un dispositif d'actionnement d'une partie orientable d'atterrisseur qui est composée de vérins d'orientation montés en « push-pull », l'invention s'applique également à un dispositif d'actionnement de type à crémaillère actionnée par deux pistons terminaux coulissant chacun dans une chambre, ou encore à un dispositif d'actionnement de type à un seul vérin, ou encore à moteur hydraulique rotatif ou tout type d'actionnement équivalent.

## Revendications

1. Architecture de système hydraulique d'orientation comprenant au moins un vérin (1) de commande d'orientation ayant des chambres connectées aux sorties d'un distributeur (4) qui présente un port d'alimentation et un port de retour, le système hydraulique comprenant un accumulateur (25) ainsi qu'une électropompe (20) agencée pour maintenir un niveau de pression prédéterminé dans l'accumulateur (25), **caractérisée en ce que** le système hydraulique comprend une réserve de secours (23) associée à l'électropompe (20) et un sélecteur général (29,30,31,32) agencé pour, dans un mode normal de fonctionnement, connecter le port d'alimentation du distributeur (4) à un dispositif de génération de pression (50) et le port de retour du distributeur (4) à une réserve principale (51) associée au dispositif de génération de pression (50) tout en assurant le remplissage de la réserve de secours (23), et, dans un mode alterné de fonctionnement, connecter le port d'alimentation du distributeur (4) à l'accumulateur (25).

2. Architecture selon la revendication 1, **caractérisée en ce que** le sélecteur général comprend une vanne de mode normal (29) et une vanne de mode alterné (30) connectées aux deux entrées d'un clapet navette (31) ayant une sortie connectée au port d'alimentation du distributeur (4), de sorte que, dans le mode normal de fonctionnement, la vanne de mode normal (29) connecte l'entrée correspondante du clapet navette (31) au dispositif de génération de pression (50) tandis que la vanne de mode alterné (30) connecte l'autre entrée du clapet navette (31) à la réserve principale (51), et dans le mode alterné de fonctionnement, la vanne de mode normal (29) connecte l'entrée correspondante du clapet navette (31) à la réserve principale (51) tandis que la vanne de mode alterné (30) connecte l'autre entrée du clapet navette (31) à l'accumulateur (25).

3. Architecture selon la revendication 1 ou la revendication 2, **caractérisée en ce que** le sélecteur général (29,30,31,32) est agencé pour, dans le mode normal de fonctionnement, connecter le port de retour du distributeur (4) à la réserve principale (51) ou à la réserve de secours (23) en fonction des indications de capteurs associés, et dans le mode alterné de fonctionnement, connecter le port de retour du distributeur (4) à la réserve de secours (23) en fermant la connexion à la réserve principale (51).

4. Architecture selon la revendication 3, **caractérisée en ce que** le port de retour du distributeur (4) est connecté aussi bien à la réserve principale (51) qu'à la réserve de secours (23), le sélecteur général comprenant une vanne de retour (32) qui, dans le mode normal de fonctionnement, laisse le port de retour du distributeur (4) connecté à la réserve principale (51) ou à la réserve de secours (23), et, dans le mode alterné de fonctionnement, ferme la connexion à la réserve principale (51).

5. Architecture selon l'une des revendications précédentes, **caractérisée en ce que** l'accumulateur (25) est équipé d'un capteur de pression (36) pour délivrer une information de gonflage dudit accumulateur, cette information étant utilisée en mode alterné de fonctionnement pour commander l'électropompe (20) pour regonfler l'accumulateur (25).

6. Architecture selon l'une des revendications précédentes, **caractérisée en ce que** l'accumulateur (25) est connecté via un clapet anti-retour (28) au dispositif de génération de pression (50) afin de pouvoir le remplir et le précharger.

7. Architecture selon l'une des revendications précédentes, **caractérisé en ce que** l'accumulateur (25) est protégé des surpressions par un clapet de surpression (27) qui est connecté à la réserve principale (51).

8. Architecture selon la revendication 7, **caractérisé en ce que** le clapet de surpression (27) est manoeuvrable manuellement pour provoquer la vidange de l'accumulateur (25) afin de permettre la maintenance du système.

## Patentansprüche

1. Hydraulisches Lenksystem, umfassend mindestens einen Lenkzylinder (1), der Kammern hat, die mit den Ausgängen eines Verteilers (4) verbunden sind, der eine Zulauföffnung und eine Rücklauföffnung hat, wobei das hydraulische System einen Akkumulator (25) sowie eine Elektropumpe (20) umfasst, die derart ausgebildet ist, dass sie in dem Akkumulator (25) ein vorgegebenes Druckniveau aufrechterhält, **dadurch gekennzeichnet, dass** das hydraulische System einen Hilfstank (23) hat, der mit der Elektropumpe (20) verbunden ist, und einen Hauptselektor (29, 30, 31, 32), der derart ausgebildet ist, dass er in einem normalen Betriebsmodus die Zulauföffnung des Verteilers (4) mit einer Druckerzeugungsvorrichtung (50) und die Rücklauföffnung des Verteilers (4) mit einem mit der Druckerzeugungsvorrichtung (50) verbundenen Haupttank (51) verbindet, während er gleichzeitig die Befüllung des Hilfstanks (23) sicherstellt, und in einem alternativen Betriebsmodus die Zulauföffnung des Verteilers (4) mit dem Akkumulator (25) verbindet.

2. Hydraulisches Lenksystem nach Anspruch 1, **dadurch gekennzeichnet, dass** der Hauptselektor ein Normalmodus-Ventil (29) und ein Alternativmodus-Ventil (30) umfasst, die mit den beiden Eingängen eines Wechselventils (31) verbunden sind, das einen Ausgang hat, der mit der Zulauföffnung des Verteilers (4) verbunden ist, derart, dass in dem normalen Betriebsmodus das Normalmodus-Ventil (29) den entsprechenden Eingang des Wechselventils (31) mit der Druckerzeugungsvorrichtung (50) verbindet, während das Wechselmodus-Ventil (30) den anderen Eingang des Wechsetventits (31) mit dem Haupttank (51) verbindet, und in dem alternativen Betriebsmodus das Normalmodus-Ventil (29) den entsprechenden Eingang des Wechselventils (31) mit dem Haupttank (51) verbindet, während das Wechselmodus-Ventil (30) den anderen Eingang des Wechselventils (31) mit dem Akkumulator (25) verbindet.

3. Hydraulisches Lenksystem nach Anspruch 1 oder Anspruch 2, **dadurch gekennzeichnet, dass** der Hauptselektor (29, 30, 31, 32) derart ausgebildet ist, dass er in dem normalen Betriebsmodus je nach Anzeigen dazugehöriger Sensoren die Rücklauföffnung des Verteilers (4) mit dem Haupttank (51) oder mit dem Hilfstank (23) verbindet, und in dem alternativen Betriebsmodus die Rücklauföffnung des Verteilers (4) mit dem Hilfstank (23) verbindet, wobei er die Verbindung mit dem Haupttank (51) sperrt.

4. Hydraulisches Lenksystem nach Anspruch 3, **dadurch gekennzeichnet, dass** die Rücklauföffnung des Verteilers (4) ebenso an den Haupttank (51) wie an den Hilfstank (23) angeschlossen ist, wobei der Hauptselektor ein Rücklaufventil (32) umfasst, das in dem normalen Betriebsmodus die Rücklauföffnung des Verteilers (4) mit dem Haupttank (51) oder dem Hilfstank (23) verbunden lässt, und in dem alternativen Betriebsmodus die Verbindung mit dem Haupttank (51) sperrt.

5. Hydraulisches Lenksystem nach einem der vorhergehenden Ansprüche, **dadurch gekennzeichnet, dass** der Akkumulator (25) mit einem Drucksensor (36) ausgestattet ist, um eine Information über die Füllung des Akkumulators zu liefern, wobei diese Information in dem alternativen Betriebsmodus dazu verwendet wird, die Elektropumpe (20) zu steuern, um den Akkumulator (25) wieder zu füllen.

6. Hydraulisches Lenksystem nach einem der vorhergehenden Ansprüche, **dadurch gekennzeichnet, dass** der Akkumulator (25) über ein Rückschlagventil (28) mit der Druckerzeugungsvorrichtung (50) verbunden ist, um diese füllen und vorladen zu können.

7. Hydraulisches Lenksystem nach einem der vorhergehenden Ansprüche, **dadurch gekennzeichnet, dass** der Akkumulator (25) durch ein Überdruckventil (27), das mit dem Haupttank (51) verbunden ist, vor Überdrücken geschützt ist.

8. Hydraulisches Lenksystem nach Anspruch 7, **dadurch gekennzeichnet, dass** das Überdruckventil (27) manuell steuerbar ist, um die Entleerung des Akkumulators (25) zu bewirken und so die Wartung des System zu gestatten.

## Claims

1. A hydraulic steering system architecture comprising at least one steering control actuator (1) having chambers connected to the outlets of a directional-control valve (4) which presents a feed port and a return port, the hydraulic system comprising an accumulator (25) and an electrically-driven pump unit (20) which is arranged to maintain a predetermined pressure level in the accumulator (25), the architecture being **characterized in that** the hydraulic system comprises an emergency supply (23) associated to the electrically-driven pump unit (20) and a general selector (29, 30, 31, 32) arranged, in a normal mode of operation, to connect the feed port of the directional-control valve (4) to a pressure-generator device (50) and the return port of the directional-control valve (4) to a main supply (51) associated with the pressure-generator device (50), while also ensuring that the emergency supply (23) is filled, and in an alternate mode of operation, to connect the feed port of the directional-control valve (4) to the accumulator (25).

2. An architecture according to claim 1, **characterized in that** the general selector comprises a normal mode valve (29) and an alternate mode valve (30) connected to the two inlets of a shuttle valve (31) having an outlet connected to the feed port of the directional-control valve (4) so that in normal operation mode, the normal mode valve (29) connects the corresponding inlet of the shuttle valve (31) to the pressure-generator device (50) while the alternate mode valve (30) connects the other inlet of the shuttle valve (31) to the main supply (51), and in the alternate mode of operation, the normal mode valve (29) connects the corresponding inlet of the shuttle valve (31) to the main supply (51) while the alternate mode valve (30) connects the other inlet of the shuttle valve (31) to the accumulator (25).

3. 'An architecture according to claim 1 or claim 2, **characterized in that** the general selector (29, 30, 31, 32) is arranged, in the normal mode of operation, to connect the return port to the directional-control valve (4) to the main supply (51) or to the emergency supply (23) as a function of information from associated sensors, and in the alternate mode of operation, to connect the return port of the directional-control valve (4) to the emergency supply (23) while closing the connection to the main supply (51).

4. An architecture according to claim 3, **characterized in that** the return port of the directional-control valve (4) is connected both to the main supply (51) and to the emergency supply (23), the general selector including a return valve (32) which, in the normal mode of operation, leaves the return port of the directional-control valve (4) connected to the main supply (51) or to the emergency supply (23), and in the alternate mode of operation, closes the connection to the main supply (51).

5. An architecture according to any preceding claim, **characterized in that** the accumulator (25) is fitted with a pressure sensor (36) for delivering information concerning the state of inflation of said accumulator, said information being used in the alternate mode of operation to control the electrically-driven pump unit (20) to reinflate the accumulator (25).

6. An architecture according to any preceding claim, **characterized in that** the accumulator (25) is connected via a check valve (28) to the pressure-generator device (50) so that it can be filled and pre-loaded.

7. An architecture according to any preceding claim, **characterized in that** the accumulator (25) is protected from excess pressure by a pressure-relief valve (27) which is connected to the main supply (51).

8. An architecture according to claim 7, **characterized in that** the pressure-relief valve (27) is manually operable to enable the accumulator (25) to be emptied for the purpose of maintaining the system.
